# FASCICULE DE BREVET EUROPEEN

(11) **EP 0 423 019 B1**
(45) Date de publication et mention de la délivrance du brevet: **28.12.1994**
(21) Numéro de dépôt: 90402806.5
(22) Date de dépôt: 09.10.1990
(51) Int. Cl.: H04N 1/32, H04L 1/12

(54) **Procédé de transmission de télécopies, avec test de la qualité de la voie de transmission et appareil de transmission pour la mise en oeuvre du procédé**
Fernkopieübertragungsverfahren mit Qualitätsprüfung der Übertragungsstrecke und Übertragungsvorrichtung zur Durchführung dieses Verfahrens
Telecopies transmission method with quality test of the transmission path and transmission device for carrying out this method

(30) Priorité: 10.10.1989 FR 8913178
(43) Date de publication de la demande: 17.04.1991
(73) Titulaire: SOCIETE D'APPLICATIONS GENERALES D'ELECTRICITE ET DE MECANIQUE SAGEM, F-75783 Paris Cédex 16 (FR)
(72) Inventeur: Charbonnier, Philippe, F-78600 Maisons Laffitte (FR)
(74) Mandataire: Bloch, Gérard

(56) Documents cités:
- EP-A- 0 137 695
- EP-A- 0 141 911
- EP-A- 0 226 756

## Description

La présente invention a tout d'abord pour objet un procédé de transmission du contenu d'un document par télécopie, sur une voie de transmission de qualité inconnue, entre un appareil d'émission et un appareil de réception, l'appareil d'émission étant susceptible d'émettre des informations à chacun des débits d'une pluralité de débits rangés en ordre décroissant à partir d'un premier débit, le plus élevé, procédé dans lequel,
- du côté émission, on émet un premier message d'essai pour essayer la qualité de la voie de transmission au premier débit,
- du côté réception, on détermine un taux d'erreur dans le premier message d'essai reçu et on envoie vers le côté émission un message d'acceptation ou de refus du premier débit, selon la valeur du taux d'erreur,
- du côté émission, en cas d'acceptation du premier débit par la réception, on émet le contenu du document au premier débit, et en cas de refus on émet un deuxième message d'essai pour essayer la qualité de la voie de transmission au deuxième débit, et ainsi de suite, jusqu'à obtenir une acceptation de la réception, auquel cas on émet le document au débit ayant donné lieu à acceptation.

Un tel procédé permet de transmettre le document avec le débit le plus rapide compatible avec la qualité de la voie de transmission, en l'occurrence une voie téléphonique.

En effet, à qualité donnée de la voie de transmission, le nombre d'erreurs de transmission est d'autant plus élevé que le débit de la transmission est élevé. Aussi, avant de transmettre un document, il est nécessaire d'essayer la qualité de la voie de transmission pour plusieurs débits afin de choisir le débit le plus rapide donnant lieu à un taux d'erreur acceptable dans le document reçu, afin d'obtenir la durée de transmission la plus courte possible compatible avec la qualité de la voie de transmission.

On connaît déjà un procédé du type défini ci-dessus, notamment par les Recommandations T.4 et T.30 du Comité Consultatif International pour le Télégraphe et le Téléphone, ou C.C.I.T.T.

Dans ce procédé connu, le contenu de chacun des messages d'essai est déterminé et connu de l'appareil de réception. En l'occurrence il s'agit d'une suite de zéros, la durée du message d'essai étant de 1,5 s. Il est donc facile à l'appareil de réception de déterminer le taux d'erreur pendant le message d'essai, pour envoyer un message d'acceptation ou de refus selon que le taux d'erreur est respectivement inférieur ou supérieur à un seuil donné.

Un procédé similaire est connu, par exemple, du document EP-A- 137 695.

Ce procédé connu présente cependant l'inconvénient d'allonger la durée totale nécessaire à la transmission d'un document.

La présente invention vise à pallier l'inconvénient précédent.

A cet effet, elle a pour objet un procédé du type défini ci-dessus, caractérisé par le fait que,
- on utilise un procédé de détermination du taux d'erreur dans la transmission des messages d'essai, par vérification de la taille, prédéterminée, de blocs de données dans les messages, indépendamment du contenu de ces blocs de données,
- du côté émission, on émet des messages d'essai comportant des blocs de données, ayant lesdites tailles prédéterminées, dont le contenu est celui du début du document,et, en cas d'acceptation, on n'émet que le contenu de la suite du document non émise dans le message d'essai, et,
- du côté réception, on sauvegarde le contenu de chaque message d'essai, au moins jusqu'à son refus.

Avec le procédé de l'invention, la durée totale nécessaire à la transmission d'un document se trouve réduite du fait que, au moment où la qualité de la transmission est jugée acceptable par la réception, il ne reste pas à transmettre la totalité du document comme dans le procédé connu, mais seulement la partie restante qui n'a pas déjà été transmise dans le message d'essai. Ce résultat est obtenu sans perte d'informations du côté réception du fait de la sauvegarde du contenu du message d'essai, donc du début du document. Il en résulte que, toutes choses égales par ailleurs, la durée totale de transmission du document avec le procédé de l'invention est réduite d'au moins la durée du message d'essai, par rapport à ce qu'elle est avec le procédé connu.

Avantageusement, on utilise, comme procédé de détermination du taux d'erreur, un procédé dans lequel, du côté émission, on émet le contenu du début du document sous forme d'une suite de lignes comportant chacune un nombre déterminé de pixels, et du côté réception, on considère qu'il y a une erreur, si une ligne reçue ne comporte pas un nombre de pixels égal audit nombre déterminé.

Un tel procédé est de mise en oeuvre particulièrement simple sur les appareils de télécopie.

Dans une première mise en oeuvre du procédé de l'invention, pour sauvegarder le contenu de chaque message d'essai, on l'imprime au fur et à mesure de sa réception.

Cette mise en oeuvre est particulièrement simple, puisqu'elle ne nécessite pas de mémoire particulière sur l'appareil de réception.

Dans une deuxième mise en oeuvre du procédé de l'invention, pour sauvegarder le contenu de chaque message d'essai, on le mémorise au fur et à mesure de sa réception, et on ne l'imprime qu'en cas d'acceptation du débit du message d'essai.

Dans ce cas, la qualité du document restitué est aussi bonne que possible.

La présente invention a également pour objet un appareil d'émission de télécopies et un appareil de réception de télécopies destinés à la mise en oeuvre du procédé de l'invention.

Ainsi, la présente invention a pour objet un appareil d'émissison de télécopies pour transmettre à un appareil de réception de télécopies, et par l'intermédiaire d'une voie de transmission de qualité inconnue, le contenu d'un document, appareil d'émission comprenant :
- des moyens d'émission pour émettre dès informations à chacun des débits d'une pluralité de débits rangés en ordre décroissant à partir d'un premier débit, le plus élevé,
- des moyens de commande desdits moyens d'émission pour commander l'émission d'un premier message d'essai pour essayer la qualité de la voie de transmission au premier débit, puis, en cas d'acceptation du premier débit par l'appareil de réception, pour commander l'émission du contenu du document au premier débit, et en cas de refus du premier débit pour commander l'émission d'un deuxième message d'essai pour essayer la qualité de la voie de transmission au deuxième débit, et ainsi de suite jusqu'à obtenir une acceptation de l'appareil de réception, auquel cas lesdits moyens de commande commandent l'émission du document au débit ayant donné lieu à acceptation, appareil d'émission caractérisé par le fait que les messages d'essai comportent des blocs de données, ayant une taille prédéterminée, et dont le contenu est celui du début du document, et que les moyens de commande sont agencés pour, en cas d'acceptation, ne commander que l'émission du contenu de la suite du document non émise dans le message d'essai.

De même, la présente invention a pour objet un appareil de réception de télécopies pour recevoir, en provenance d'un appareil d'émission de télécopies, et par l'intermédiaire d'une voie de transmission de qualité inconnue, le contenu d'un document transmis dans des blocs de données de taille prédéterminée, l'appareil d'émission étant susceptible d'émettre des informations à chacun des débits d'une pluralité de débits rangés en ordre décroissant à partir d'un premier débit, le plus élevé, l'appareil de réception comprenant des moyens de détermination d'un taux d'erreur, pour déterminer un taux d'erreur dans chacun des messages d'une pluralité de messages d'essai, dont le contenu est celui du début du document, et qui sont émis par l'appareil d'émission afin d'essayer la qualité de la voie de transmission à chacun des débits, et des moyens pour envoyer, vers l'appareil d'émission, un message d'acceptation ou de refus de chacun des débits, en réponse à la valeur du taux d'erreur du message d'essai correspondant, l'appareil de réception étant caractérisé par le fait que les moyens de détermination du taux d'erreur dans la transmission des messages d'essai sont sensibles à la taille prédéterminée des blocs de données et insensibles au contenu de ces blocs, et qu'il comprend des moyens pour sauvegarder le contenu de chaque message d'essai, au moins jusqu'à son refus.

La présente invention sera mieux comprise grâce à la description suivante de la mise en oeuvre préférée du procédé de l'invention, ainsi que des appareils destinés à cette mise en oeuvre, faite en se référant aux dessins annexés, sur lesquels :
- la figure 1 représente un schéma par blocs d'un appareil d'émission de télécopies et d'un appareil de réception de télécopies, ces deux appareils étant reliés par l'intermédiaire d'un réseau téléphonique,
- la figure 2 représente un diagramme simplifié du fonctionnement de l'appareil d'émission, et,
- la figure 3 représente un diagramme simplifié du fonctionnement de l'appareil de réception.

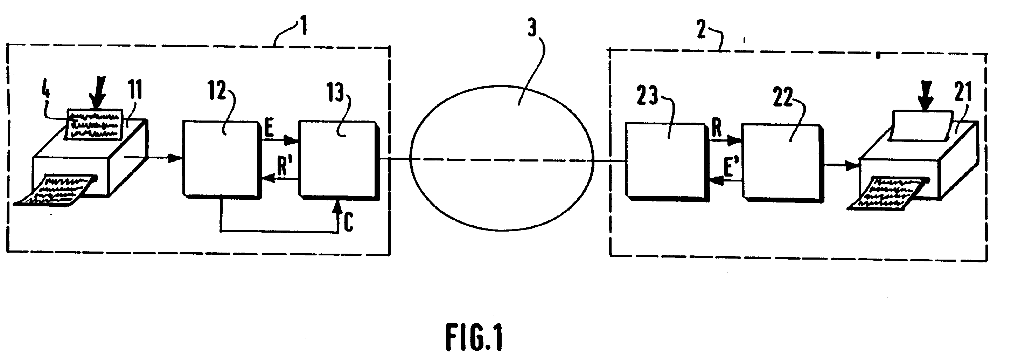

Sur la figure 1, la référence 1 désigne un appareil d'émission de télécopies, la référence 2 désigne un appareil de réception de télécopies, et la référence 3 un réseau téléphonique.

L'appareil d'émission 1 est susceptible d'émettre à plusieurs débits, et, comme cela a déjà été signalé, l'invention est relative à la détermination du débit le plus rapide compatible avec la qualité de la voie téléphonique du réseau 3 qui relie l'appareil d'émission 1 à l'appareil de réception 2.

L'appareil d'émission 1 comprend ici un dispositif 11 d'analyse d'un document 4 à émettre, un modulateur-démodulateur, ou modem, 13, et un circuit 12 de codage du signal d'analyse et de commande du modem 13.

Le dispositif d'analyse 11, de type connu, est pourvu d'une sortie délivrant le signal d'analyse.

Le modem 13, de type connu, est pourvu d'un accès bidirectionnel relié à une ligne du réseau 3, d'une entrée de signal recevant le signal F à émettre, d'une sortie de signal délivrant un signal R′ reçu, et d'une entrée de commande recevant un signal C de commande du débit d'émission.

Le circuit 12 de codage et de commande, comprend notamment, et de façon connue, un microprocesseur et une mémoire. Il est pourvu d'une première entrée recevant le signal d'analyse, d'une deuxième entrée recevant le signal R′, d'une première sortie délivrant le signal E, et d'une deuxième sortie délivrant le signal C.

L'appareil de réception 2 comprend ici un modem 23, un dispositif d'impression 21, et un circuit 22 de décodage du signal reçu, de détermination du taux d'erreur, et de commande du dispositif d'impression 21.

Le modem 23, de type connu, est pourvu d'un accès bidirectionnel relié à une ligne du réseau 3, d'une entrée de signal recevant un signal E′ à émettre, et d'une sortie de signal délivrant un signal R reçu.

Le dispositif d'impression 21, de type connu, est pourvu d'une entrée recevant un signal d'impression, et il imprime, en réponse à ce signal, le document reçu.

Le circuit 22 de décodage de détermination du taux d'erreur, et de commande, comprend notamment, et de façon connue, un microprocesseur et une mémoire. Il est pourvu d'une entrée recevant le signal R, d'une première sortie délivrant le signal E′ et d'une deuxième sortie délivrant le signal d'impression.

Avant d'aborder la description du fonctionnement des appareils dont les structures viennent d'être décrites, il est à noter que, en général, afin de permettre l'émission de documents de L'appareil 1 vers l'appareil 2 comme de l'appareil 2 vers l'appareil 1, ces deux appareils sont identiques. l'appareil 1 comprend ainsi les organes qui viennent d'être décrits pour l'appareil 2, l'appareil 2 comprenant lui-même les organes qui viennent d'être décrits pour l'appareil 1. Ceci ne change rien au présent exposé dans lequel, dans un souci de simplicité, et aussi parce que cela est envisageable, l'appareil 1 est limité à l'émission de documents tels que le document 4, l'appareil 2 étant limité à la réception de ces documents.

Le fonctionnement des appareils 1 et 2, pour la transmission de documents depuis l'appareil 1 vers l'appareil 2 est le suivant.

Tout d'abord, il est rappelé que l'appareil d'émission 1 est, de façon connue, susceptible d'émettre des informations à chacun des débits d'une pluralité de débits rangés en ordre décroissant à partir d'un premier débit, le plus élevé. Par exemple, le premier débit est de 9600 bits/s, le deuxième débit est de 4800 bits/s, et ainsi de suite.

Lorsque l'appareil 1 veut transmettre un document comme le document 4 de la figure 1 à l'appareil 2, il appelle cet appareil 2 par l'intermédiaire du réseau 3. Dès que la communication est établie, l'appareil 2 émet vers l'appareil 1 une série de signaux qui représentent d'une part son propre numéro de téléphone, et d'autre part ses possibilités, aussi bien normalisées que privées.

Les possibilités normalisées d'un appareil sont celles qui sont définies par exemple par les Recommandations T.4 et T.30 du C.C.I.T.T., et qui permettent à des appareils de constructeurs différents de se comprendre.

Les possibilités privées sont celles qui sont propres à un constructeur particulier, ou à un groupe de constructeurs, qui, par exemple lorsque deux télécopieurs du même constructeur ou du même groupe de constructeurs se trouvent en présence, permettent à ces télécopieurs de s'échapper du protocole normalisé pour utiliser un protocole privé propre au constructeur, présentant, dans la situation envisagée, certains avantages sur le protocole privé.

La présente invention est un protocole privé.

L'appareil d'émission 1, ayant reçu en provenance de l'appareil de réception 2 les signaux qui indiquent le numéro de celui-ci et ses possibilités, répond par une série de signaux qui représentent d'une part le numéro de téléphone de l'appareil 1, d'autre part le protocole privé qui a été choisi et donc les fonctions privées que l'appareil 2 devra utiliser, et enfin un message d'essai au premier débit, le plus élevé.

La fonction du message d'essai, appelé encore message de vérification du conditionnement, est comparable à celle du signal TCF ("Training check") défini par la Recommandation T.30 du C.C.I.T.T. Cette fonction est d'essayer la qualité de la voie de transmission au débit le plus élevé, afin de voir si cette qualité est suffisante pour autoriser une transmission à ce débit avec un taux d'erreur acceptable.

Toutefois, alors que dans le protocole, ou procédé, normalisé, le contenu du signal TCF est une série de 0 durant 1,5 s, le contenu du message d'essai, dans le procédé de l'invention, est celui du début du document 4, arrêté à une fin de ligne complète.

Dans l'appareil d'émission 1, c'est le circuit 12 qui commande le dispositif d'analyse 11 et le modem 13 pour qu'il en soit ainsi. Simultanément, et pour des raisons qui seront mieux comprises dans la suite, le circuit 12 stocke dans sa mémoire le contenu du message d'essai. De façon connue, l'appareil d'émission 1 émet le contenu du document sous forme d'une suite de lignes comportant chacune un nombre déterminé de pixels, nombre déterminé par exemple égal à 1728 si le document est au format normalisé A4.

Du côté réception, l'appareil 2 reçoit le message d'essai. Le circuit 22 décode ce signal et vérifie que chacune des lignes du document reçu comporte bien 1728 pixels. S'il n'en est pas ainsi, on considère qu'il y a eu une erreur dans la transmission. Le circuit 22 détermine alors le taux d'erreur en calculant le quotient du nombre de lignes ne comportant pas 1728 pixels et du nombre de lignes comportant 1728 pixels. Le circuit 22 compare ensuite le taux d'erreur à un seuil, égal par exemple 10 %.

Il est à noter que ce procédé de détermination du taux d'erreur par comptage du nombre de pixels par ligne reçue, et donc indépendamment du contenu du message transmis, est normalement mis en oeuvre dans le protocole normalisé, pour accepter ou refuser la totalité du document selon que le taux d'erreur ainsi déterminé sur la totalité du document est respectivement inférieur ou supérieur au seuil. Toutefois, dans le protocole normalisé, ce procédé n'est pas utilisé pour le message d'essai pour lequel on détermine le taux d'erreur en comptant le nombre de pixels noirs reçu, puisque les pixels du message d'essai sont tous blancs.

Dans le procédé de l'invention, on utilise le message d'essai pour transporter des informations utiles, ce qui interdit la détermination du taux d'erreur par comptage des erreurs affectant chacun des bits, la valeur de chacun d'entre eux étant à priori inconnue. Néanmoins la demanderesse a constaté, de façon surprenante, que le procédé de détermination du taux d'erreur par comptage du nombre de pixels par ligne est suffisant pour évaluer la qualité de la voie de tranmission à un débit donné.

Selon que le taux d'erreur est inférieur ou supérieur au seuil, le circuit 22 engendre un message d'acceptation ou de refus, respectivement, et l'envoie à l'appareil d'émission 1 par l'intermédiaire du modem 23 et du réseau 3.

Le message de confirmation est analogue au message CFR ("Confirmation to Receive"), de confirmation pour recevoir, défini par la Recommandation T.30 du C.C.I.T.T. Quant au message de refus, il est analogue au message PTT ("Failure To Train"), d'échec du conditionnement, défini dans cette même Recommandation.

En cas d'acceptation, l'appareil d'émission 1 n'émet que le contenu de la suite du document non émise dans le message d'essai.

En cas de refus, l'appareil d'émission 1 émet un nouveau message d'essai, cette fois au deuxième débit, qui sera à son tour accepté ou refusé, et ainsi de suite. C'est seulement en cas d'acceptation de l'appareil de réception 2 que l'appareil d'émission 1 émet le contenu de la suite du document, au débit ayant donné lieu à acceptation.

A partir du moment où la suite du document est transmise, la procédure se termine de façon connue.

Naturellement, il est préférable, pour le cas où plusieurs messages d'essais à des débits décroissants doivent être émis, que le circuit 12 mémorise le contenu du début du document, de façon à ce qu'il puisse le répéter sans que le dispositif 11 ait à l'analyser une nouvelle fois.

Par ailleurs, il est nécessaire que l'appareil de réception 2 soit prévu pour sauvegarder le contenu de chacun des messages d'essai, au moins jusqu'à ce que la décision concernant son refus ou son acceptation soit prise, puisque, si le message d'essai est accepté, son contenu ne sera pas émis à nouveau par l'appareil d'émission 1.

Pour sauvegarder le contenu du message d'essai, le circuit 22 le stocke ici dans sa mémoire, dont la capacité est prévue en conséquence, au fur et à mesure de la réception, et n'en commande l'impression qu'en cas d'acceptation L'impression est ensuite complétée pour restituer le document complet.

Dans une version simplifiée, pour éviter d'avoir à prévoir dans le circuit 22 une mémoire de capacité relativement grande, le circuit 22 peut commander l'impression du contenu du message d'essai au fur et à mesure de la réception. Dans ce cas, la présentation du document reçu en souffre. En effet, si plusieurs messages d'essai sont nécessaires avant d'obtenir l'acceptation, le document se trouve précédé du contenu des messages d'essai refusé, c'est-à-dire le début du document restitué avec une qualité insuffisante. Pour éviter une telle répétition donnant lieu a une sorte de begaiement visuel, on peut prévoir que le deuxième message d'essai contienne la suite du document, commençant là où le premier message d'essai s'est arrêté, et ainsi de suite. Cela présente en outre l'avantage de supprimer la mémorisation à l'émission et de réduire encore la durée totale de transmission. Cela présente toutefois l'inconvénient d'un risque de pertes irrémédiables d'informations, dans le début du document en particulier, puisque, même si le taux d'erreur y est jugé trop élevé, il n'y a pas de répétition. Toutefois, dans certaines applications où le prix de revient de l'appareillage et la rapidité de la transmission priment sur la qualité du document final restitué, ce type de fonctionnement peut être envisagé.

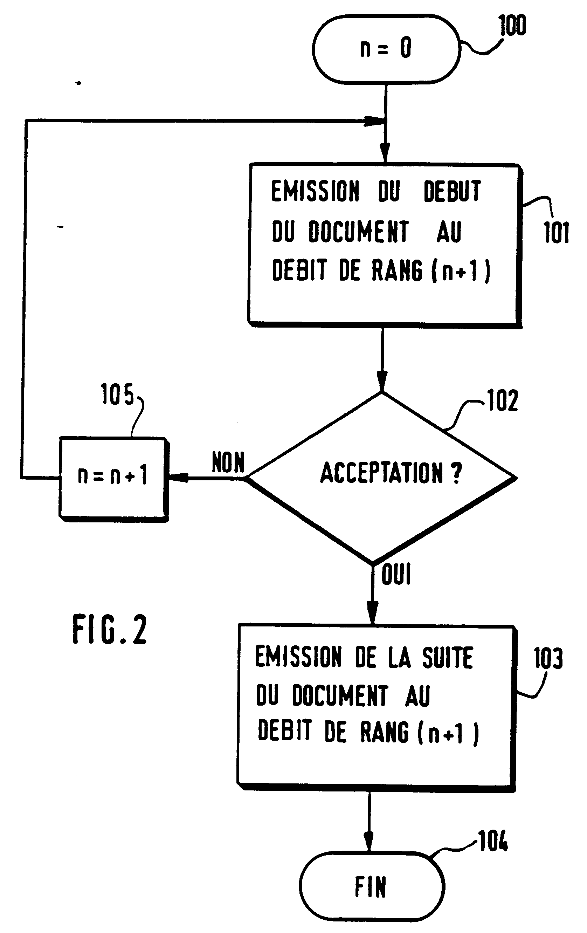

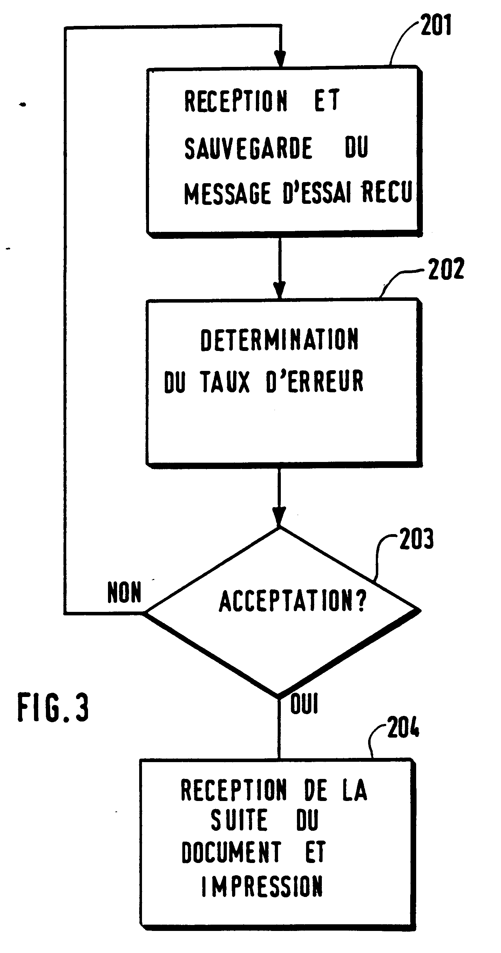

Les figures 2 et 3 représentent des diagrammes schématisant les étapes du procédé de l'invention, du côté de l'émission pour la figure 2, et du côté de la réception pour la figure 3.

Sur la figure 2, le bloc 100 schématise une étape d'initialisation au cours de laquelle une variable n entière, définissant le rang du débit essayé, est mise à zéro. Le bloc 101 schématise la première étape, au cours de laquelle le premier message d'essai, au débit de rang 1, ici et par exemple 9600 bits/s, est émis. Le bloc 102 représente l'étape de réception du message d'acceptation ou de refus du débit de rang 1 en provenance de la réception. En cas d'acceptation, on passe au bloc 103, qui schématise l'émission de la suite du message au débit accepté, ici le débit de rang 1 de 9600 bits/s. Le bloc 103 est suivi du bloc 104 schématisant la fin du procédé. En cas de refus, on passe au bloc 105, qui schématise l'incrémentation de la valeur n d'une unité, et on recommence l'étape schématisée par le bloc 101 avec la nouvelle valeur de n, et ainsi de suite.

Sur la figure 3, le bloc 201 schématise l'étape de réception et de sauvegarde du message d'essai reçu. Le bloc 202 schématise l'étape de détermination du taux d'erreur, qui se déroule d'ailleurs pratiquement en même temps que l'étape schématisée par le bloc 201.

Le bloc 203 schématise l'étape de décision d'acceptation ou de refus. En cas d'acceptation, le bloc 204 schématise la réception du contenu de la suite du document, et d'impression. En cas de refus, on recommence l'étape 201 pour la réception et la sauvegarde d'un nouveau message d'essai, à débit moindre, commandé par l'émission.

Naturellement, la présente invention n'es pas limitée à la description qui vient d'être faite, et de nombreuses variantes peuvent être envisagées sans sortir de son cadre.

Ainsi, il n'est pas obligatoire d'utiliser le procédé de détermination du taux d'erreur, par comptage des pixels d'une ligne, qui a été décrit. On peut par exemple prévoir d'utiliser la procédure normalisée optionnelle de correction d'erreur qui prévoit de véhiculer les informations utiles relatives au document dans les trames de type H.D.L.C. ("Highrate Data Link Controller") définies par la Recommandation T 30, Annexe 4.

Le critère d'acceptation ou de refus est alors basé sur le signal CRC de contrôle redondant cyclique ("Cyclic Redundant Check").

De même, dans le cas d'une voie de transmission en duplex total ("full duplex") c'est-à-dire fonctionnant simultanément dans les deux directions, il est possible, au lieu de prévoir une durée déterminée pour le message d'essai, par exemple 1,5 s, de prévoir seulement une durée maximale pour ce message, l'appareil de réception interrompant l'appareil d'emission dès que le taux d'erreur, déterminé en permanence, dépasse le seuil. Il est possible d'avoir une voie de transmission en duplex total avec un réseau privé ou encore avec un réseau du type de celui connu sous le nom de Réseau Numérique à Intégration de Services ("R.N.I.S.").

Dans la description qui vient d'être faite, on diminue la valeur du débit entre un message d'essai et le suivant. Ceci n'est pas absolument obligatoire, et il est possible que, par exemple, le deuxième message d'essai soit transmis au premier débit, comme le premier message d'essai, puis le troisième et le quatrième message d'essai au deuxième débit, et ainsi de suite, On assure ainsi une augmentation du rang des débits au fur et à mesure de l'augmentation du rang des messages d'essai, sans systématiquement ralentir le débit entre un message d'essai et le suivant.

En effet, la qualité de la voie de transmission peut, dans certains cas s'améliorer au cours du temps.

Dans le cas d'un réseau de type R.N.I.S, il n'est d'ailleurs prévu aucun ralentissement du débit au fur et à mesure de l'augmentation du rang des messages d'essais l'appareil d'émission recommençant une émission lorsque l'appareil de réception, qui détermine en permanence le taux d'erreur, lui envoie un message de refus ou d'interruption.

## Revendications

1. Procédé de transmission du contenu d'un document (4) par télécopie sur une voie de transmission (3) de qualité inconnue entre un appareil d'émission (1) et un appareil de réception (2), l'appareil d'émission (1) étant susceptible d'émettre des informations à chacun des débits d'une pluralité de débits rangés en ordre décroissant à partir d'un premier débit, le plus élevé, procédé dans lequel,
- du côté émission, on émet (101) un premier message d'essai pour essayer la qualité de la voie de transmission (3) au premier débit,
- du côté réception, on détermine (202) un taux d'erreur dans le premier message d'essai reçu et on envoie (203) vers le côté émission un message d'acceptation ou de refus du premier débit, selon la valeur du taux d'erreur,
- du côté émission, en cas d'acceptation du premier débit par la réception, on émet (103) le contenu du document (4) au premier débit, et en cas de refus on émet (105, 101) un deuxième message d'essai pour essayer la qualité de la voie de transmission (3) au deuxième débit, et ainsi de suite, jusqu'à obtenir une acceptation de la réception, auquel cas on émet (103) le document au débit ayant donné lieu à acceptation,
procédé caractérisé par le fait que,
- on utilise (202) un procédé de détermination du taux d'erreur dans la transmission des messages d'essai, par vérification de la taille, prédéterminée, de blocs de données dans les messages, indépendamment du contenu de ces blocs de données,
- du côté émission, on émet (101, 102, 105) des messages d'essai comportant des blocs de données, ayant lesdites tailles prédéterminées, dont le contenu est celui du début du document (4), et, en cas d'acceptation, on n'émet (103) que le contenu de la suite du document (4) non émise dans le message d'essai, et,
- du côté réception, on sauvegarde (201) le contenu de chaque message d'essai, au moins jusqu'à son refus.

2. Procédé selon la revendication 1, dans lequel on utilise, comme procédé de détermination du taux d'erreur, un procédé dans lequel, du côté émission, on émet (101) le contenu du début du document sous forme d'une suite de lignes comportant chacune un nombre déterminé de pixels, et, du côté réception, on considère (202) qu'il y a une erreur, si une ligne reçue ne comporte pas un nombre de pixels égal audit nombre déterminé.

3. Procédé selon la revendication 1 ou 2, dans lequel, pour sauvegarder (201) le contenu de chaque message d'essai, on l'imprime au fur et à mesure de sa réception.

4. Procédé selon la revendication 1 ou 2, dans lequel, pour sauvegarder (201) le contenu de chaque message d'essai, on le mémorise au fur et à mesure de sa réception, et on ne l'imprime qu'en cas d'acceptation (203) du débit du message d'essai.

5. Appareil d'émission (1) de télécopies, pour la mise en oeuvre du procédé selon les revendications 1 à 4, pour transmettre, à un appareil de réception de télécopies (2), et par l'intermédiaire d'une voie de transmission (3) de qualité inconnue, le contenu d'un document (4), appareil d'émission (1) comprenant :
- des moyens d'émission (13) pour émettre des informations à chacun des débits d'une pluralité de débits rangés en ordre décroissant à partir d'un premier débit, le plus élevé,
- des moyens de commande (12) desdits moyens d'émission (13) pour commander l'émission d'un premier message d'essai pour essayer la qualité de la voie de transmission (3) au premier débit, puis, en cas d'acceptation du premier débit par l'appareil de réception (2), pour commander l'émission du contenu du document (4) au premier débit, et en cas de refus du premier débit, pour commander l'émission d'un deuxième message d'essai pour essayer la qualité de la voie de transmission (3) au deuxième débit, et ainsi de suite jusqu'à obtenir une acceptation de l'appareil de réception (2), auquel cas lesdits moyens de commande (12) commandent l'émission du document (4) au débit ayant donné lieu à acceptation, appareil d'émission caractérisé par le fait que les messages d'essai comportent des blocs de données, ayant une taille prédéterminée et dont le contenu est celui du début du document (4), et, que les moyens de commande (12) sont agencés pour, en cas d'acceptation, ne commander que l'émission du contenu de la suite du document (4) non émise dans le message d'essai.

6. Appareil de réception (2) de télécopies, pour la mise en oeuvre du procédé selon les revendications 1 à 4, pour recevoir, en provenance d'un appareil d'émission (1) de télécopies, et par l'intermédiaire d'une voie de transmission (3) de qualité inconnue, le contenu d'un document (4) transmis dans des blocs de données de taille prédéterminée, l'appareil d'émission (1) étant susceptible d'émettre des informations à chacun des débits d'une pluralité de débits rangés en ordre décroissant à partir d'un premier débit, le plus élevé, l'appareil de réception comprenant des moyens (22) de détermination d'un taux d'erreur, pour déterminer un taux d'erreur dans chacun des messages d'une pluralité de messages d'essai, dont le contenu est celui du début du document, et qui sont émis par l'appareil d'émission (1) afin d'essayer la qualité de la voie de transmission (3) à chacun des débits, et des moyens (22, 23) pour envoyer, vers l'appareil d'émission (1), un message d'acceptation ou de refus de chacun des débits, en réponse à la valeur du taux d'erreur du message d'essai correspondant, l'appareil de réception (2) étant caractérisé par le fait que les moyens (22) de détermination du taux d'erreur dans la transmission des messages d'essai sont sensibles à la taille prédéterminée des blocs de données et insensibles au contenu de ces blocs, et qu'il comprend des moyens (21, 22) pour sauvegarder le contenu de chaque message d'essai, au moins jusqu'à son refus.

7. Appareil selon la revendication 6, dans lequel, l'appareil d'émission (1) émettant le contenu du début du document sous forme d'une suite de lignes comportant chacune un nombre déterminé de pixels, les moyens (22) de détermination du taux d'erreur comprennent des moyens pour déterminer le nombre de pixels reçus par ligne, et des moyens pour comptabiliser une erreur lorsque ce nombre n'est pas égal au nombre déterminé.

8. Appareil selon l'une des revendications 6 ou 7, dans lequel lesdits moyens de sauvegarde comprennent des moyens (21) pour imprimer le contenu du début du document au fur et à mesure de la réception du message d'essai.

9. Appareil selon l'une des revendications 6 ou 7, dans lequel lesdits moyens de sauvegarde comprennent des moyens de mémorisation (22) du contenu du début du document au fur et à mesure de la réception du message d'essai, et des moyens pour ne l'imprimer qu'en cas d'acceptation du débit du message d'essai.

## Patentansprüche

1. Verfahren zur Übertragung des Inhalts eines Dokumentes (4) mittels Fernkopie auf einer Übertragungsstrecke (3) von unbekannter Qualität zwischen einem Sendegerät (1) und einem Empfangsgerät (2), wobei das Sendegerät (1) Informationen mit jeder der Geschwindigkeiten einer Vielzahl von Geschwindigkeiten, geordnet in abnehmender Reihenfolge ausgehend von einer ersten, höchsten Geschwindigkeit, senden kann, ein Verfahren, bei dem:
- man sendeseitig eine erste Testnachricht sendet (101), um die Qualität des Übertragungsweges (3) bei der ersten Geschwindigkeit zu erproben,
- man empfangsseitig eine Fehlerrate in der ersten empfangenen Testnachricht bestimmt (202) und man je nach der Fehlerrate eine Meldung der Annahme oder Ablehnung der ersten Geschwindigkeit an die Sendeseite schickt (203),
- man sendeseitig im Falle der Annahme der ersten Geschwindigkeit durch den Empfang den Inhalt des Dokumentes (4) mit der ersten Geschwindigkeit sendet (103) und man im Falle der Ablehnung eine zweite Testnachricht sendet (105, 101), um die Qualität des Übertragungsweges (3) bei der zweiten Geschwindigkeit zu erproben, und so fort, bis eine Annahme seitens des Empfanges erfolgt, in welchem Fall man das Dokument mit derjenigen Geschwindigkeit sendet (103), die zur Annahme geführt hat,
Verfahren, dadurch gekennzeichnet, daß:
- man ein Verfahren zur Bestimmung der Fehlerrate bei der Übertragung der Testnachrichten durch Prüfung der vorher festgelegten Größe von Datenblöcken in den Nachrichten unabhängig vom Inhalt dieser Datenblöcke anwendet (202),
- man sendeseitig Testnachrichten sendet (101, 102, 105), welche Datenblöcke enthalten, die diese vorbestimmten Größen besitzen und deren Inhalt demjenigen des Anfangs des Dokumentes (4) entspricht, und man im Falle einer Annahme nur den Inhalt des übrigen, in der Testnachricht noch nicht gesendeten Dokumentes (4) sendet (103) und
- man empfangsseitig den Inhalt jeder Testnachricht mindestens bis zu ihrer Ablehnung sichert (201).

2. Verfahren nach Anspruch 1, bei dem man als Verfahren zur Bestimmung der Fehlerrate ein Verfahren anwendet, bei dem man sendeseitig den Inhalt des Anfangs des Dokumentes in Form einer Folge von Zeilen sendet (101), die jeweils eine bestimmte Anzahl von Pixeln enthalten, und man empfangsseitig einen Fehler annimmt (202), wenn eine empfangene Zeile nicht eine Pixelzahl enthält, welche dieser bestimmten Zahl entspricht.

3. Verfahren nach Anspruch 1 oder 2, bei dem man, um den Inhalt jeder Testnachricht zu sichern (201), diesen entsprechend ihrem Empfang ausdruckt.

4. Verfahren nach Anspruch 1 oder 2, bei dem man, um den Inhalt jeder Testnachricht zu sichern (201), diesen entsprechend ihrem Empfang speichert und ihn nur im Falle der Annahme (203) der Geschwindigkeit der Testnachricht ausdruckt.

5. Fernkopiesendegerät (1) zur Durchführung des Verfahrens nach den Ansprüchen 1 bis 4, um den Inhalt eines Dokumentes (4) mittels eines Übertragungsweges (3) von unbekannter Qualität an ein Fernkopieempfangsgerät (2) zu übertragen, wobei das Sendegerät (1) umfaßt:
- Sendemittel (13) zum Absenden von Informationen mit jeder der Geschwindigkeiten einer Vielzahl von Geschwindigkeiten, geordnet in abnehmender Reihenfolge ausgehend von einer ersten, höchsten Geschwindigkeit,
- Mittel zur Steuerung (12) dieser Sendemittel (13), um das Absenden einer ersten Testnachricht zu steuern, um die Qualität des Übertragungsweges (3) bei der ersten Geschwindigkeit zu erproben, um dann im Falle einer Annahme der ersten Geschwindigkeit durch das Empfangsgerät (2) das Absenden des Inhalts des Dokumentes (4) mit der ersten Geschwindigkeit zu steuern und im Falle der Ablehnung der ersten Geschwindigkeit die Absendung einer zweiten Testnachricht zu steuern, um die Qualität des Übertragungsweges (3) bei der zweiten Geschwindigkeit zu erproben, und so fort, bis eine Annahme seitens des Empfangsgerätes (2) erfolgt, in welchem Fall die Steuermittel (12) die Absendung des Dokumentes (4) mit derjenigen Geschwindigkeit, die zur Annahme geführt hat, steuern,
Sendegerät, dadurch gekennzeichnet, daß die Testnachrichten Datenblöcke enthalten, die eine vorbestimmte Größe besitzen und deren Inhalt demjenigen des Anfangs des Dokumentes (4) entspricht, und daß die Steuermittel (12) vorgesehen sind, um im Falle der Annahme nur die Absendung des Inhalts des übrigen, in der Testnachricht noch nicht gesendeten Dokumentes (4) zu steuern.

6. Fernkopieempfangsgerät (2) zur Durchführung des Verfahrens nach den Ansprüchen 1 bis 4, um von einem Fernkopiesendegerät (1) mittels eines Übertragungsweges (3) von unbekannter Qualität den Inhalt eines Dokumentes (4) zu empfangen, der in Datenblöcken von vorbestimmter Größe übertragen wird, wobei das Sendegerät (1) Informationen mit jeder der Geschwindigkeiten einer Vielzahl von Geschwindigkeiten, geordnet in abnehmender Reihenfolge ausgehend von einer ersten, höchsten Geschwindigkeit, senden kann, wobei das Empfangsgerät Mittel (22) zur Bestimmung einer Fehlerrate umfaßt, um eine Fehlerrate in jeder der Nachrichten einer Vielzahl von Testnachrichten zu bestimmen, deren Inhalt demjenigen des Anfangs des Dokumentes entspricht und die von dem Sendegerät (1) gesendet werden, um die Qualität des Übertragungsweges (3) bei jeder der Geschwindigkeiten zu erproben, sowie Mittel (22, 23), um an das Sendegerät (1) für jede der Geschwindigkeiten eine Meldung der Annahme oder Ablehnung in Abhängigkeit von dem Wert der Fehlerrate der entsprechenden Testnachricht zu senden, wobei das Empfangsgerät (2) dadurch gekennzeichnet ist, daß die Mittel (22) zur Bestimmung der Fehlerrate bei der Übertragung der Testnachrichten empfindlich für die vorbestimmte Größe der Datenblöcke und unempfindlich für den Inhalt dieser Blöcke sind und daß es Mittel (21, 22) umfaßt, um den Inhalt jeder Testnachricht mindestens bis zu ihrer Ablehnung zu sichern.

7. Gerät nach Anspruch 6, bei dem - wobei das Sendegerät (1) den Inhalt des Anfangs des Dokumentes in Form einer Folge von Zeilen sendet, die jeweils eine bestimmte Anzahl von Pixeln enthalten - die Mittel (22) zur Bestimmung der Fehlerrate Mittel umfassen, um die pro Zeile empfangene Pixelzahl zu bestimmen, sowie Mittel, um einen Fehler zu verbuchen, wenn diese Zahl nicht der bestimmten Zahl entspricht.

8. Gerät nach einem der Ansprüche 6 oder 7, bei dem die Mittel zum Sichern Mittel (21) umfassen, um den Inhalt des Anfangs des Dokumentes entsprechend dem Empfang der Testnachricht auszudrucken.

9. Gerät nach einem der Ansprüche 6 oder 7, bei dem die Mittel zum Sichern Mittel zum Speichern (22) des Inhalts des Anfangs des Dokumentes entsprechend dem Empfang der Testnachricht umfassen sowie Mittel, um diesen nur im Falle der Annahme der Geschwindigkeit der Testnachricht auszudrucken.

## Claims

1. A process for transmitting the content of a document (4) by facsimile on a transmission path (3) of unknown quality between a transmission device (1) and a reception device (2), the transmission device (1) being able to transmit information to each of the output points of a plurality of output points arranged in descending order beginning with a first output point, the highest, a process in which,
- on the transmission side, a first test message is transmitted (101) to test the quality of the transmission path (3) to the first output point,
- on the reception side, a rate of error in the first test message received is determined (202) and a message of acceptance or refusal of the first output point, according to the value of the rate of error, is sent (203) to the transmission side,
- on the transmission side, in the case of acceptance of the first output point by the reception, the content of the document (4) is transmitted (103) to the first output point and, in the case of refusal, a second test message is transmitted (105, 101) in order to test the quality of the transmission path (3) to the second output point, and so forth until an acceptance of the reception is obtained, in which case the document is transmitted (103) to the output point having brought about the acceptance, a process characterised in that
- a process is used (202) of determining the rate of error in the transmission of the test messages by checking the predetermined size of blocks of data in the messages independently of the content of these blocks of data,
- on the transmission side, test messages are transmitted (101, 102, 105) comprising blocks of data, having the said predetermined sizes, of which the content is that of the beginning of the document (4), and, in the case of acceptance, only the content of the rest of the document (4) not transmitted in the test message is transmitted (103), and,
- on the reception side, the content of each test message is saved (201) at least until its refusal.

2. A process according to claim 1, in which, as a process for determining the rate of error, a process is used in which, on the transmission side, the content of the beginning of the document is transmitted (101) in the form of a series of lines each comprising a predetermined number of pixels, and, on the reception side, there is considered (202) to be an error if a line received does not comprise a number of pixels equal to the said predetermined number.

3. A process according to claim 1 or 2, in which in order to save (201) the content of each test message it is printed as it is being received.

4. A process according to claim 1 or 2, in which in order to save (201) the content of each test message it is memorised as it is being received and it is only printed in the case of acceptance (203) of the output point of the test message.

5. A facsimile transmission device (1) for implementing the process according to claims 1 to 4 for transmitting the content of a document (4) to a facsimile reception device (2) by means of a transmission path (3) of unknown quality, a transmission device (1) comprising:
- transmission means (13) for transmitting information to each of the output points of a plurality of output points arranged in descending order beginning with a first output point, the highest,
- control means (12) of the said transmission means (13) for controlling the transmission of a first test message to test the quality of the transmission path (3) to the first output point, then, in the case of acceptance of the first output point by the reception device (2), to control the transmission of the content of the document (4) to the first output point, and in the case of refusal of the first output point, to control the transmission of a second test message to test the quality of the transmission path (3) to the second output point, and so forth until an acceptance of the reception device (2) is obtained, in which case the said control means (12) control the transmission of the document (4) to the output point having brought about an acceptance, a transmission device characterised by the fact that the test messages comprise blocks of data of a predetermined size and of which the content is that of the beginning of the document (4), and, that the control means (12) are arranged to control, in the case of acceptance, only the transmission of the content of the rest of the document (4) not transmitted in the test message.

6. A facsimile reception device (2) for initiating the process according to claims 1 to 4, to receive, from a facsimile transmission device (1) and by means of a transmission path (3) of unknown quality, the content of a document (4) transmitted in blocks of data of predetermined size, the transmission device (1) being able to transmit information to each of the output points of a plurality of output points arranged in descending order beginning with a first output point, the highest, the reception device comprising means (22) for determining a rate of error, to determine a rate of error in each of the messages of a plurality of test messages, of which the content is that of the beginning of the document and which are transmitted by the transmission device (1) in order to test the quality of the transmission path (3) to each of the output points, and means (22, 23) for sending, to the transmission device (1), a message of acceptance or refusal of each of the output points in response to the value of the rate of error of the corresponding test message, the reception device (2) being characterised by the fact that the means (22) for determining the rate of error in the transmission of the test messages are sensitive to the predetermined size of the blocks of data and not sensitive to the content of these blocks, and that it comprises means (21, 22) to save the content of each test message at least until its refusal.

7. A device according to claim 6, in which the transmission device (1) transmitting the content of the beginning of the document in the form of a series of lines each comprising a predetermined number of pixels, the means (22) for determining the rate of error comprise means for determining the number of pixels received per line and means for accounting for an error when this number is not equal to the predetermined number.

8. A device according to one of claims 6 or 7, in which the said saving means comprise means (21) for printing the content of the beginning of the document as the test message is being received.

9. A device according to one of the claims 6 to 7, in which the said saving means comprise means for memorising (22) the content of the beginning of the document as the test message is being received and means for printing it only in the case of the acceptance of the output point of the test message.
